Europäisches Patentamt

(19) European Patent Office          (11) Publication number: **0 159 149**

Office européen des brevets                              **A1**

(12) **EUROPEAN PATENT APPLICATION**

(21) Application number: **85301980.0**          (51) Int. Cl.⁴: **G 01 F 23/02**
                                                         **A 47 J 27/21**
(22) Date of filing: **21.03.85**

(30) Priority: **24.03.84 GB 8407719**          (71) Applicant: **D.H. HADEN LIMITED**
**07.04.84 GB 8409064**                          **Mount Road Burntwood**
                                                 **Walsall West Midlands WS7 0AW(GB)**

(43) Date of publication of application:          (72) Inventor: **Haden, Denis Howard**
**23.10.85 Bulletin 85/43**                      **Little Hayes Beaudesert Park**
                                                 **Chestall Near Rugeley Staffordshire(GB)**
(84) Designated Contracting States:
**AT BE CH DE FR GB IT LI LU NL SE**             (74) Representative: **Yelland, William Alan et al,**
                                                 **H.N. & W.S. SKERRETT Rutland House 148, Edmund**
                                                 **Street**
                                                 **Birmingham B3 2LQ(GB)**

(54) **Water heating vessel having a water level indicator.**

(57) A water heating vessel (10) having water level indicating means (12) comprising a fixed member (20) secured to a wall (13) of the vessel to at least partially occupy an elongate opening in said wall; wherein the fixed member (20) comprises an elongage transparent or translucent partition (22) opposite sides of which provide an external face (26), visible at the exterior of the vessel, and an internal face (27) at least partially exposed to the interior of the vessel; and wherein the fixed member (20) and said wall (13) are constructed and arranged so that thermal effects, caused by heating of water in the vessel, can cause water to move vertically in contact with said internal face (27) when the vessel contains at least a predetermined minimum quantity of water, to ensure that boiling of the water in the vessel will sterilise the indicator means.

FIG.2.

## WATER HEATING VESSEL HAVING A WATER LEVEL INDICATOR

The invention concerns vessels for heating water, such as electric kettles and jugs, having means enabling a user to ascertain the level of water in the vessel without having to peer through an opening, such as a spout or lid opening, into the interior of the vessel.

A water boiling electric jug is at present available, which jug is provided with a form of level indicator which comprises an upstanding transparent tubular member which is located on the outside of the vessel. The tubular member contains a float and has, at its upper and lower ends, passages which lead to the interior of the vessel through the wall of the vessel.

This form of level indicator can give rise to bacterial contamination of the water, and an object of the present invention is to enable the risk of bacterial contamination to be minimised.

According to the present invention there is provided a water heating vessel having water level indicating means comprising a fixed member secured to a wall of the vessel to at least partially occupy an elongate opening in said wall; wherein the fixed member comprises an elongate transparent or translucent partition opposite sides of which provide an external face, visible at the exterior of the vessel, and an internal face at least partially exposed to the interior of the vessel; and wherein the fixed member and said wall are constructed and arranged so that thermal effects, caused by heating of water in the vessel, can cause water to move vertically in contact with said internal face when the vessel contains at least a predetermined minimum quantity of water.

The internal face of the partition may be prismatic or otherwise shaped, textured or coated to provide a distinct visual contrast between wetted and unwetted portions of the internal face.

The partition may constitute the indicating means, and may be bonded, glued, clamped or otherwise mounted on said wall to occupy and close said elongate opening.

Alternatively, the partition may constitute an external wall portion of the fixed member, the latter having further wall portions bounding an internal channel in the fixed member. The channel may be wholly open towards the interior of the vessel, or may be connected with the interior by vertically elongate openings at least one of which reaches to below the level reached by said minimum quantity of water, so that water from within the vessel can circulate through the channel during heating.

The channel may contain a float, and is preferably shaped so as to be self-draining when the vessel is emptied.

The further wall portions may be integral with the fixed member. However, such forms of fixed member having disadvantages of manufacturing cost, and deterioration of appearance upon being used under certain conditions.

An object of a preferred form of the invention is to enable these disadvantages to be reduced.

In a preferred form of the present invention the vessel is characterised in that the fixed member cooperates with a further member of the indicating means to define a channel which is connected with the interior of the vessel and which contains a float.

The further member is preferably removable from or movable relative to the vessel so as to provide access to the interior face of the partition, so that the interior face may be cleaned.

The invention will be described further, by way of example, with reference to the accompanying diagrammatic drawings, wherein:-

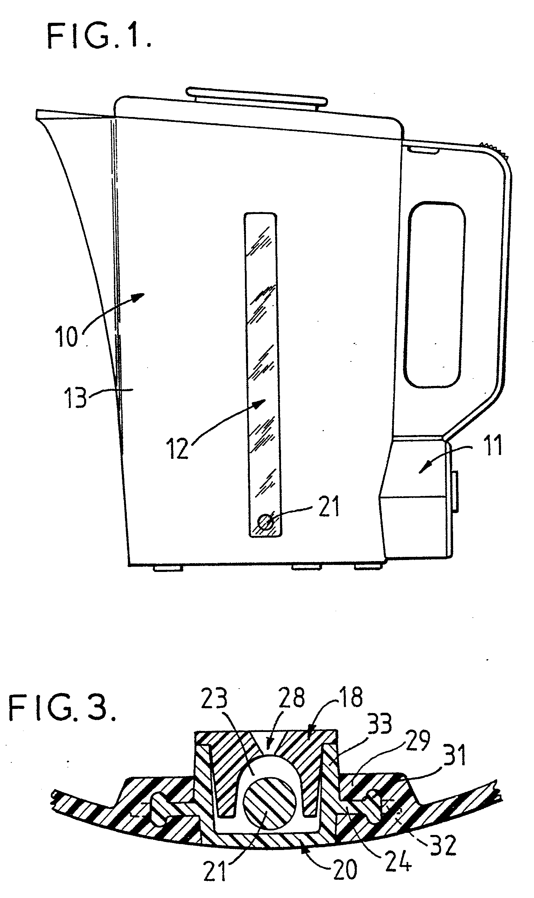

FIGURE 1 shows a vessel of the invention in side elevation;

FIGURES 2 and 3 show partial vertical and transverse enlarged cross-sections of the vessel of the invention incorporating a first embodiment of indicating means;

FIGURE 4 shows an enlarged exploded vertical cross-sectional view of the indicating means shown in FIGURES 2 and 3;

FIGURES 5 and 6 show a fixed member of the indicating means in front and side elevation prior to incorporation into the vessel;

FIGURES 7, 8, 9 and 10- are cross-sectional views, similar to FIGURE 3 of four further embodiments of the indicating means.

The water heating vessel generally comprises a moulded plastics vessel body 10, an electric immersion heater and switch assembly 11, and indicating means 12 secured to a wall 13 of the body 10. The vessel is arranged for heating any quantity of water within a range extending from a minimum quantity, which is determined to provide a minimum water level 14 sufficient cover a heating portion 15 of the immersion heater, to a maximum quantity which is determined to provide a maximum level 16 for safe and satisfactory operation of the vessel.

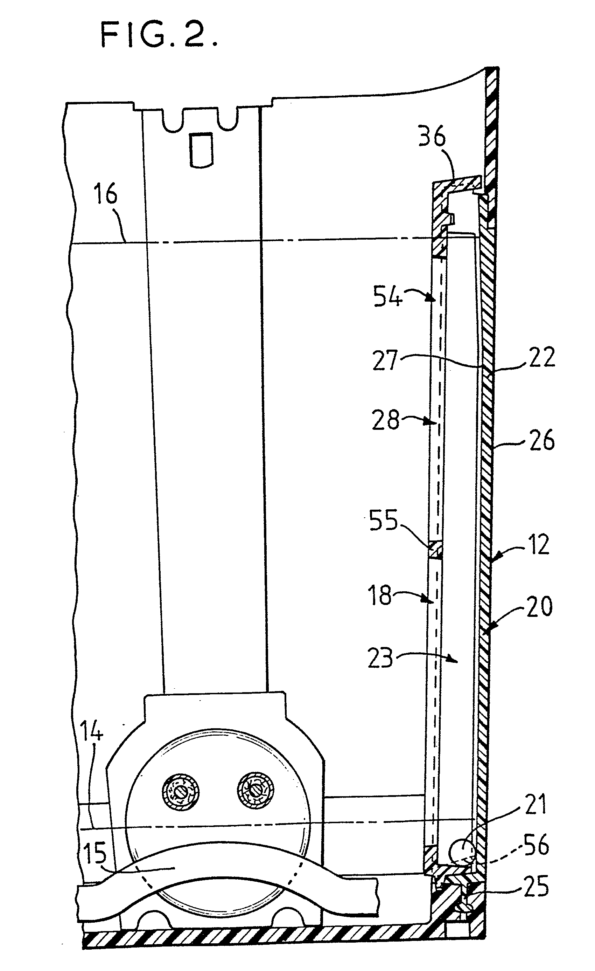

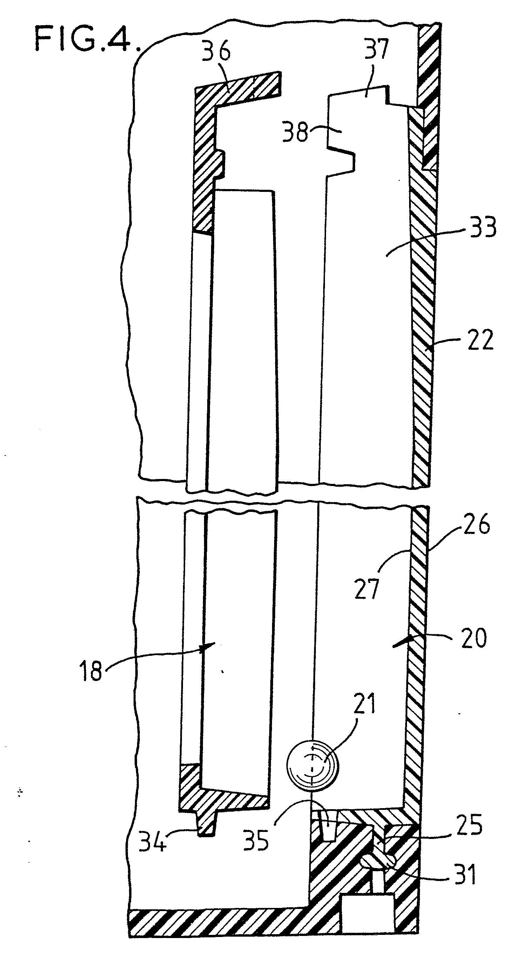

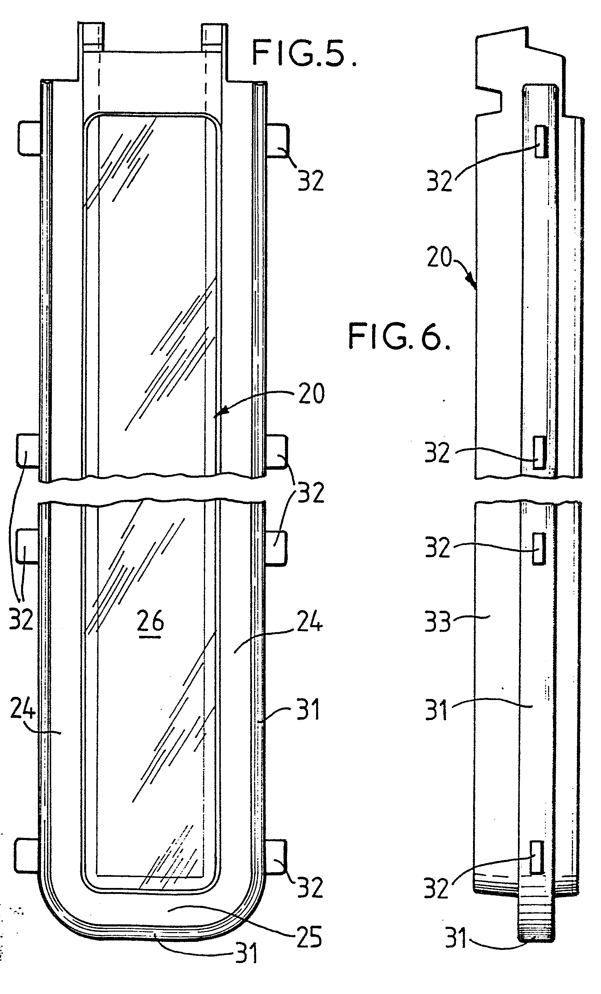

In the embodiment shown in FIGURES 2 to 6, the indicating means 12 comprises a transparent, elongate, moulded plastics fixed member 20, an elongate insert member 18 and a red spherical float 21. The fixed member 20 is shaped to provide a partition, longitudinally ribbed laterally projecting side flanges 24, and a similar downwardly projecting bottom flange 25. The side flanges 24 project laterally beyond the ribs 31 to provide series of vertically spaced lateral projections 32. The partition 25 provides an external face 26 and a prismatic internal face 27. The external face 26 is provided with markings to indicate at least the maximum and minimum levels 16 and 14. The indicator member 20 has inwardly directed wall portions 33 which cooperate with the elongate insert member 18 to define a channel 23. The channel 23 is longitudinally open towards the interior of the vessel via a mouth 28 having a width less than the width of the float 21.

During manufacture, the body 10 is moulded within the fixed member 20 _in situ_ in the mould, so that portions 29 of the wall 13 at least sealingly engage and interlock with the flanges 24 and 25 the ribs 31 and the projections 32; so that the body material grips and at least partially adheres to the material of the fixed member; and so that the member 20 occupies a vertical elongate opening in the wall 13.

The member 18 is moulded separately and is inserted into the vessel so that a bottom projection 34 engages a socket 35 formed in bottom parts of the fixed member 20 and body 10, and so that an upper float retaining flange 36 snaps over and engages locating formations 37 on an upper interior portions 38 of the walls 33, whereby releasably to locate the member 18 in position against the fixed member 20.

In use, water heated within the vessel circulates within the body and the channel 23 so that all the water in the vessel is heated. If the face 27 becomes contaminated or dirty, the member 18 can be unclipped and removed from the vessel, to permit the face to be cleaned.

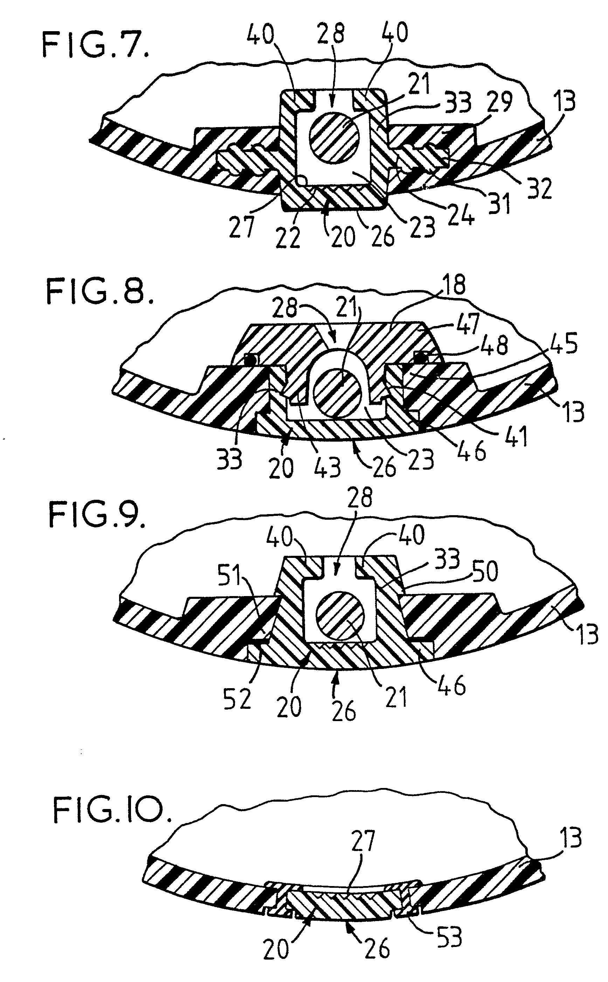

The second embodiment of indicator means 20 shown in FIGURE 7 differs from the first embodiment in that the insert member 18 is omitted and the fixed member 20 is modified to include rear walls 40 which define the mouth 28 to retain the float 21. A clip-in retainer (not shown) is provided at the top of the channel to retain the float.

The third, fourth and fifth embodiments shown in FIGURES 8, 9 and 10 differ from the first and second embodiments in that the fixed members 20 are modified for securing into the vessel 10 after the body wall 13 has been moulded.

In the third embodiment the insert member 18 and fixed member 20 are modified to include snap-fit or interlocking interengagement means 41 on cooperating wall portions 43 and 33 to retain said members 18 and 20 together so that portions 45 of the wall 13 are embraced between a front peripheral flange 46 on the member 20 and a rear peripheral flange 47 on the member 18, and to clamp an elastomeric seal 48 between the portions 45 and the flange 47.

The fourth embodiment is partially similar to the second embodiment in that the fixed member 20 includes the rear walls 40, and employs a dip in retainer. However, in this embodiment, the walls 40 have tapered peripheral surfaces adjacent undercut peripheral shoulder portions 50; the member 20 has a front peripheral flange 46; and the body wall 13 has tapered portions 51 whereby to permit the fixed member 20 to be pressed inwardly or snap-fitted into the opening in the wall 13 until the portions 51 are embraced between the flange 46 and portions 50. A sealing layer 52 or seal may be provided between the wall 13 and the member 20.

In the fifth embodiment the fixed member 20 is substantially constituted by the partition 22, which partition is retained in the opening in the wall 13 by a double channel elastomeric sealing member 53, which extends peripherally around the partition and is flanged to embrace both the wall 13 and the fixed member.

It will be readily appreciated that the fixed member is open substantially along its entire height to the interior of the vessel (except for one or more relatively very short braces, e.g. the brace 55 which divide the mouth 28 into vertically elongate openings 54, as shown in FIGURE 2) so that water and steam can flow at all levels directly to and from the channel to rapidly sterilise the channel in all embodiments except the fifth, and in the fifth embodiment the rear surface wholly confronts the interior of the vessel.

Furthermore, there are no small passages in the indicator means, thus removing the risk of blockages causing faulty level indicators. In the event of the float is removed, the partition enables the contents of the vessel to be viewed directly to give a clear level indication.

-The bottom of the insert member 18 and/or the fixed member 20 may be sloped downwards and inwards, as indicated by the broken line 56 in FIGURE 2, so that the channel 28 is self-draining.

The invention is not confined to the precise details of the foregoing examples, and many variations are possible within the scope of the invention as defined by the appended claims. For example, features of any one embodiment may be utilised in one or more of the other embodiments to form modified forms thereof, e.g. the walls 33 in the third embodiment could be provided with shoulders equivalent to the shoulders 50, so that the fixed member 20 would remain in place if the insert member 18 were removed or omitted. In the third to fifth embodiments, the body wall could be of metal spun sheet material in which the elongate opening is pierced and the wall adjacent thereto preferably pressed to cooperate with the indicating means, which is modified in peripheral shape to engage and effect a seal with the thinner metal wall.

CLAIMS

1. A water heating vessel (10) having water level indicating means (12) comprising a fixed member (20) secured to a wall (13) of the vessel to at least partially occupy an elongate opening in said wall; wherein the fixed member (20) comprises an elongate transparent or translucent partition (22) opposite sides of which provide an external face (26), visible at the exterior of the vessel, and an internal face(27) at least partially exposed to the interior of the vessel; and wherein the fixed member (20) and said wall (13) are constructed and arranged so that thermal effects, caused by heating of water in the vessel, can cause water to move vertically in contact with said internal face (27) when the vessel contains at least a predetermined minimum quantity of water.

2. A vessel as claimed in Claim 1 wherein the indicator means defines a channel (23) open to the interior of the vessel via a vertically elongate mouth (28).

3. A vessel as claimed in Claim 2 wherein said mouth (20) is defined by an insert member (18) engaging the fixed member (20) within the vessel.

4. A vessel as claimed in Claim 2 or 3 wherein the indicating means (12) is snap-fitted to said wall (13).

5. A vessel as claimed in Claim 4 as appended to Claim 3 wherein the insert and fixed members (18 and 20) are provided with snap-fit interengagement means (41) to hold said members together so as to embrace said wall (13) therebetween.

6. A vessel as claimed in Claim 1, 2 or 3 wherein the vessel wall (13) is moulded from plastics material with the fixed member (20) in situ, the fixed member (20) having flanges (24,25) embedded in said wall (13).

7.     A vessel as claimed in Claim 6 wherein said flanges (24) are provided with a rib or ribs (31) and spaced lateral projections (32).

8.     A vessel as claimed in any preceding claim wherein the indicator means (12) comprises a float (21).

9.     A vessel as claimed in Claim 1 wherein said partition (22) is located by an elastomeric sealing member (53) which is flanged to embrace the wall (13) and the partition (22).

10.     A vessel as claimed in any preceding claim wherein the partition has a prismatic or contrast providing inside face (27).

# FIG.1.

# FIG.3.

# FIG.2.

0159149

FIG.4.

FIG.5.

FIG.6.

FIG.7.

FIG.8.

FIG.9.

FIG.IO.

## European Patent Office

### EUROPEAN SEARCH REPORT

Application number

| | DOCUMENTS CONSIDERED TO BE RELEVANT | EP 85301980.0 |
|---|---|---|

| Category | Citation of document with indication, where appropriate, of relevant passages | Relevant to claim | CLASSIFICATION OF THE APPLICATION (Int. Cl 4) |
|---|---|---|---|
| A | <u>US - A - 3 968 688</u> (EATON) <br> * Totality * <br> -- | 1 | G 01 F 23/02 <br> A 47 J 27/21 |
| A | <u>DE - A - 1 648 121</u> (SIEMENS) <br> * Fig. 1-3 * <br> -- | 1,4 | |
| A | <u>DD - A - 145 796</u> (MARCINKOWSKI) <br> * Fig. * <br> ---- | 1,8 | |
| | | | TECHNICAL FIELDS SEARCHED (Int. Cl 4) |
| | | | G 01 F 23/00 <br> A 47 J 27/00 |

The present search report has been drawn up for all claims

| Place of search | Date of completion of the search | Examiner |
|---|---|---|
| VIENNA | 12-06-1985 | KREHAN |